# EUROPÄISCHE PATENTSCHRIFT

(11) **EP 3 085 126 B1**
(45) Veröffentlichungstag und Bekanntmachung des Hinweises auf die Patenterteilung: **28.02.2018**
(21) Anmeldenummer: 14814806.7
(22) Anmeldetag: 10.12.2014
(51) Int. Cl.: H04W 8/18, H04W 60/00, H04W 4/02, H04W 4/04, H04W 48/18, H04M 1/725, G01C 21/26, H04B 7/185, H04M 1/60, H04W 8/02, H04W 64/00

(54) **VERFAHREN ZUR ROAMING-VERWALTUNG IN EINER MOBILFUNKEINHEIT, INFOTAINMENT-ANLAGE FÜR EIN KRAFTFAHRZEUG UND KRAFTFAHRZEUG**
METHOD FOR ROAMING MANAGEMENT IN A MOBILE RADIO UNIT, INFOTAINMENT SYSTEM FOR A MOTOR VEHICLE, AND MOTOR VEHICLE
PROCÉDÉ DE GESTION D'ITINÉRANCE DANS UNE UNITÉ DE TÉLÉPHONIE MOBILE, SYSTÈME D'INFODIVERTISSEMENT POUR VÉHICULE AUTOMOBILE ET VÉHICULE AUTOMOBILE

(30) Priorität: 19.12.2013 DE 102013226647
(43) Veröffentlichungstag der Anmeldung: 26.10.2016
(73) Patentinhaber: Bayerische Motoren Werke Aktiengesellschaft, 80809 München (DE)
(72) Erfinder: KRAUSS, Thomas, 81373 München (DE); TAFELMAYER, Robert, 84169 Altfraunhofen (DE)
(86) Internationale Anmeldenummer: PCT/EP2014/077227
(87) Internationale Veröffentlichungsnummer: WO 2015/091161

(56) Entgegenhaltungen:
- WO-A1-2011/161490
- WO-A1-2014/151583
- US-A1- 2011 081 951
- US-A1- 2011 117 909
- US-A1- 2013 310 108
- US-A1- 2013 329 639

## Beschreibung

### Gebiet der Erfindung

Die Erfindung bezieht sich auf ein Verfahren zur Roaming-Verwaltung in einer Mobilfunkeinheit, in deren Speicher mehrere unterschiedliche, einzeln aktivierbare Identitätsprofile hinterlegt sind, die unterschiedliche Zugangsoptionen der Mobilfunkeinheit zu unterschiedlichen Mobilfunknetzen umfassen,
wobei automatisiert nach vorgegebenen Regeln und unter Berücksichtigung einer aktuellen Position der Mobilfunkeinheit eine Angemessenheit eines aktuell aktiven Identitätsprofils überprüft und eine Entscheidung über eine Umschaltung zu einem aktuell inaktiven Identitätsprofil getroffen wird.

Die Erfindung bezieht sich weiter auf eine Infotainment-Anlage für ein Kraftfahrzeug, umfassend
- eine Mobilfunkeinheit als Sende- und Empfangseinheit, in deren Speicher mehrere unterschiedliche, einzeln aktivierbare Identitätsprofile hinterlegt sind, die unterschiedliche Zugangsoptionen der Mobilfunkeinheit zu unterschiedlichen Mobilfunknetzen umfassen,
- eine mit der Mobilfunkeinheit funktional gekoppelte Navigationseinheit,
- eine mit der Mobilfunkeinheit und der Navigationseinheit funktional gekoppelte Steuereinheit, die eingerichtet ist, automatisiert nach vorgegebenen Regeln und unter Berücksichtigung einer aktuellen Position der Mobilfunkeinheit eine Angemessenheit eines aktuell aktiven Identitätsprofils zu überprüfen und eine Entscheidung über eine Umschaltung zu einem aktuell inaktiven Identitätsprofil zu treffen.

Die Erfindung bezieht sich schließlich auf ein mit einer derartigen Infotainment- Anlage ausgestattetes Kraftfahrzeug.

### Stand der Technik

Gattungsgemäße Roaming-Verwaltungsverfahren sind bekannt aus der WO 2011/161490 A1. Diese Druckschrift offenbart mit einer SIM-Karte (SIM: Subscriber Identification Module, Benutzeridentifikationsmodul) ausgestatte Mobilfunkeinheiten. Die SIM-Karte weist dabei zwei Identitätsprofile auf, zwischen denen bedarfsweise gewechselt werden kann. Gemäß gängigen Mobilfunk-Standards sind auf einer SIM-Karte eine Mehrzahl von Dateien gespeichert, die betreiber- und benutzerspezifische Daten sowie Daten über aktuell erreichbare Mobilfunknetze enthalten. Diese Dateien werden bei Wechselwirkung der Mobilfunkeinheit mit Mobilfunknetzen ausgelesen und/oder editiert. Von besonderer Bedeutung ist das sogenannte Roaming, bei dem ein Benutzer seine Mobilfunkeinheit in Bereiche außerhalb des Abdeckungsbereichs seines Heimat-Netzbetreibers transportiert. Um dort Mobilfunkdienste in Anspruch nehmen zu können, muss er sich in Netze fremder Betreiber einwählen, wobei Art und Umfang sowie Kosten der in Anspruch genommenen Dienste von konkreten Verträgen des Heimat-Netzbetreibers mit dem Betreiber derjenigen Netze abhängen, die aktuell in Anspruch genommen werden. Um zu vermeiden, dass der Benutzer unzureichende und/oder überteuerte Dienste in einem Netzwerk in Anspruch nimmt, mit dessen Betreiber der Heimatnetzbetreiber keine oder unzureichende Verträge hat, während eine bessere Diensteversorgung zu günstigeren Preisen in einem anderen, ebenfalls erreichbaren Mobilfunknetz in Anspruch genommen werden können, bedarf es einer Verwaltung, die jeweils der Konstellation des Einzelfalls gerecht wird. Ein solches Verwaltungsverfahren erfolgt in der Regel automatisiert, da eine manuelle Verwaltung durch den Benutzer, dessen detaillierte Kenntnisse von bestehenden Verträgen voraussetzen würde.

In der vorgenannten Druckschrift sind auf der SIM-Karte zwei Identitätsprofile des Benutzers hinterlegt, nämlich ein Heimat-Profil und ein Roaming-Profil. Das Heimat-Profil dient der Abwicklung von Dienst-Inanspruchnahmen im Heimatnetz; das Roaming-Profil dient der Abwicklung von Dienst-Inanspruchnahmen in fremden Netzen. Als wesentlicher Bestandteil jedes Profils definieren gängige Mobilfunk-Standards die sogenannte IMSI (International Mobile Subscriber Identity). Die IMSI ist eine eindeutige Teilnehmerkennung und einem Mobilfunkbetreiber mit Landeskennung (MCC: Mobile Country Code) und Mobilfunkbetreiberkennung (MNC: Mobile Network Code) zugeordnet.

Im Rahmen der Roaming-Verwaltung wird jeweils die aktuelle Position der Mobilfunkeinheit ermittelt. Dies kann über satellitengesteuerte Positionsbestimmung (z.B. GPS) oder in Wechselwirkung mit Elementen eines landgestützten Mobilfunknetzes erfolgen. Abhängig von der ermittelten Position berechnet eine mit der Mobilfunkeinheit gekoppelte Steuereinheit nach vorgegebenen Regeln, welche der gespeicherten IMSIs jeweils zu aktivieren ist, um benötigte Mobilfunkdienste optimal in Anspruch nehmen zu können, was insbesondere von der konkreten Einwahl in eines der an der ermittelten Position erreichbaren Mobilfunknetze abhängt. Dieses System hat Nachteile in Fällen, in denen sich der Benutzer in einem Grenzgebiet zwischen den Netzen unterschiedlicher Betreiber aufhält. Hier kann es vorkommen, dass die im Wesentlichen auf die aktuelle Position fokussierten Regeln zur Auswahl der passenden IMSI zu einem schnell wechselnden Umschalten zwischen den IMSIs führen. Dies ist insbesondere bei sich schnell bewegenden Mobilfunkeinheiten der Fall, beispielsweise bei Mobilfunkeinheiten, die als Schnittstelle einer Infotainment-Anlage eines Kraftfahrzeugs dienen. In vielen Fällen führt ein IMSI-Wechsel zu einer wenigstens temporären Verbindungsunterbrechung, meist jedenfalls wenigstens zu Änderungen der aktuell verfügbaren Dienste.

Aus der US 2013/329639 A1 ist ein Mobilfunkgerät mit dual SOM-dual standby, mit dual SIM-dual active sowie mit multiple SIM-multiple standby/active bekannt. Die Auswahl der verwendeten Teilnehmer-Konfiguration, d.h. der betreffenden SIM, wodurch der betreffende Netzbetreiber ausgewählt wird, beruht auf der Basis von festgelegten Regeln, wie beispielsweise dem Aufenthaltsort. Beim Aufenthaltsort wird unterschieden zwischen zu Hause, im Büro oder beispielsweise im Einkaufs-Center. Ferner kann die Auswahl in Abhängigkeit von der Stadt, in der sich das Mobilfunkgerät befindet, oder von der nächstgelegenen Basisstation und damit dem nächstgelegenen Netzbetreiber erfolgen.

Aus der nachveröffentlichten WO 2014/151583 A1 ist ein auf einem Smartphone durchgeführtes, gattungsgemäßes Roaming-Verwaltungsverfahren bekannt, bei dem bei der Entscheidung über den Profilwechsel zusätzlich die auf (z.B. GPS-) Navigationsdaten gestützte Abschätzung berücksichtigt wird, ob sich das Smartphone gerade auf eine Zone schlechter Mobilfunkqualität zu bewegt.

### Aufgabenstellung

Es ist die Aufgabe der vorliegenden Erfindung, ein Roaming-Verwaltungsverfahren zur Verfügung zu stellen, welches auch in Grenzgebieten zu weniger Verbindungsabbrüchen führt.

Eine weitere Aufgabe der Erfindung ist es, eine entspreche Infotainment-Anlage für Kraftfahrzeuge zur Verfügung zu stellen.

### Darlegung der Erfindung

Die erstgenannte Aufgabe wird in Verbindung mit den Merkmalen des Oberbegriffs von Anspruch 1 dadurch gelöst, dass die Mobilfunkeinheit eine Sende- und Empfangseinheit einer Infotainment-Anlage eines Kraftfahrzeugs ist und bei der Entscheidung über den Profilwechsel zusätzlich ein geschätztes Bewegungsziel der Mobilfunkeinheit berücksichtigt wird.

Die zweitgenannte Aufgabe wird weiter in Verbindung mit den anderen Merkmalen des Anspruchs 8 dadurch gelöst, dass die Steuereinheit weiter eingerichtet ist, bei der Entscheidung über den Profilwechsel zusätzlich ein aus der Navigationseinheit abrufbares, geschätztes Bewegungsziel der Mobilfunkeinheit zu berücksichtigen. Die Erfindung umfasst ein Verfahren gemäß Anspruch 1, eine Infotainment-Anlage gemäß Anspruch 8, sowie ein Kraftfahrzeug gemäß Anspruch 9. Bevorzugte Ausführungsformen sind Gegenstand der abhängigen Ansprüche.
Wesentliches Merkmal der Erfindung ist, dass nicht nur eine aktuelle Position der Mobilfunkeinheit, sondern zusätzlich ein durch Schätzung ermitteltes Bewegungsziel der Mobilfunkeinheit berücksichtigt wird, wenn automatisiert über einen eventuellen Identitätsprofilwechsel zu entscheiden ist. Hierdurch wird ermöglicht, dass auch in Fällen, in denen ein Profilwechsel aufgrund der aktuellen Position zu einer momentan günstigeren Dienste-Inanspruchnahme führen würde, ein eventuell mit Verbindungsabbruch verbundener Profilwechsel im Hinblick darauf unterbleiben kann, dass sich die Mobilfunkeinheit in Kürze höchstwahrscheinlich wieder an einer Position befinden wird, an der das aktuelle Profil eine bessere Performance als das aktuell optimale Profil liefern wird. Insofern kann mittels des erfindungsgemäßen Verfahrens temporär eine suboptimale Dienste-Inanspruchnahme in Kauf genommen werden, was jedoch durch den Vorteil eines unterbliebenen Verbindungsabbruchs im Hinblick auf die Gesamtperformance deutlich überkompensiert wird. Erst in Fällen, in denen anhand des abgeschätzten Bewegungsziels deutlich wird, dass das aktuell optimale Profil auch längerfristig Vorteile gegenüber Alternativen haben wird, wird ein Profilwechsel initiiert und ein Verbindungsabbruch in Kauf genommen. Insgesamt können auf diese Weise die Anzahl der für den Benutzer ungünstigen Verbindungsabbrüche bzw. die Kosten für in Anspruch genommene Dienste minimiert werden.

Bei einer bevorzugten Ausführungsform der Erfindung wird ein Navigationsziel, welches in einer funktional mit der Mobilfunkeinheit gekoppelten Navigationseinheit aktiv ist, als das geschätzte Bewegungsziel verwendet. Mit anderen Worten erfolgt die erfindungsgemäße Schätzung des Bewegungsziels auf Basis einer expliziten Eingabe in eine Navigationseinheit. In diesem Zusammenhang sei darauf hingewiesen, dass Begrifflichkeiten wie Mobilfunkeinheit, Steuereinheit, Navigationseinheit etc. im vorliegenden Zusammenhang stets rein funktional und nicht zwingend konstruktiv zu verstehen sind. Insbesondere sind Geräte denkbar, die funktionale Mobilfunk-, Steuer- und Navigationseinheiten etc. in einem gemeinsamen Gerät enthalten. Selbstverständlich ist es jedoch auch möglich, unterschiedliche Geräte funktional zu koppeln. Beide Varianten sollen von der vorliegenden Erfindung erfasst sein.
Alternativ kann ein wahrscheinliches Bewegungsziel als das geschätzte Bewegungsziel verwendet werden, wobei als das wahrscheinliche Bewegungsziel ein Bewegungsziel verwendet wird, welches nach vorgegebenen Regeln anhand von aktuellen Bewegungsumstände-Parametern aus einer Datenbank ausgewählt wird, die frühere Bewegungsziele der Mobilfunkeinheit samt deren zugeordneten Bewegungsumstände-Parametern umfasst. Eine solche Datenbank enthält beispielsweise eine Zuordnung von früheren Bewegungszielen mit Startzeiten, Kalenderdaten, Startfahrtrichtungen etc. Häufig zu gleichen Tageszeiten gefahrene Strecken, wie beispielsweise ein Weg zwischen Wohnort und Arbeitsplatz, führen daher zu hohen Eintragszahlen in der Datenbank. Ähneln aktuelle Fahrtumstände-Parameter häufig gespeicherten Fahrtumstände-Parametern liegt eine hohe Wahrscheinlichkeit dafür vor, dass auch das gleiche Bewegungsziel vorliegt. Dieses wahrscheinliche Bewegungsziel wird gemäß der erläuterten Ausführungsform der Erfindung als das geschätzte Bewegungsziel verwendet, welches in die aktuelle Entscheidung über einen Profilwechsel einfließt.
Moderne Kraftfahrzeuge sind mit komplexen Anlagen zur Unterhaltung und Informationsgewinnung, beispielsweise über Verkehrssituationen, Nachrichten etc., sogenannten Infotainment-Anlagen, ausgestattet. Die entsprechenden Daten fließen über eine Mobilfunkeinheit im Kraftfahrzeug und mit dieser wechselwirkende Einrichtungen landgestützter Mobilfunknetze. Wie eingangs bereits erwähnt, ist eine effiziente Roaming-Verwaltung insbesondere in sich schnell bewegenden Mobilfunkeinheiten von besonderer Bedeutung. Die genannten Mobilfunkeinheiten von Infotainment-Anlagen von Kraftfahrzeugen sind hiervon besonders betroffen.

Günstigerweise umfasst der die Identitätsprofile enthaltende Speicher eine SIM-Karte, auf der eine Mehrzahl von jeweils ein Identitätsprofil repräsentierenden IMSIs gespeichert sind. Dieser Ansatz verfolgt den aus dem Stand der Technik bekannten Ansatz der Speicherung mehrerer IMSIs auf einer SIM-Karte. Alternativ hierzu kann auch vorgesehen sein, dass der die Identitätsprofile enthaltende Speicher eine Mehrzahl von SIM-Karten umfasst, auf denen jeweils eine ein Identitätsprofil repräsentierende IMSI gespeichert ist. Diese Variante hat Vorteile im Hinblick auf Nachrüst- und Erweiterbarkeit des Systems.

Die für die effiziente Roaming-Verwaltung nach wie vor erforderliche aktuelle Position der Mobilfunkeinheit wird bevorzugt unter Einbeziehung satellitengestützter Positionsbestimmung mittels einer funktional mit der Mobilfunkeinheit gekoppelten Positionsbestimmungseinheit ermittelt. Typischerweise steht eine solche Positionsbestimmungseinheit mit dem weltweiten GPS-System in Verbindung und ist Bestandteil eines üblichen Navigationsgerätes.

Alternativ oder zusätzlich kann vorgesehen sein, dass die aktuelle Position der Mobilfunkeinheit unter Einbeziehung positionsbezogener Daten aus mit der Mobilfunkeinheit in Datenaustausch stehenden Netzwerk-Equipment-Elementen ermittelt wird. Bekanntermaßen sind landgestützte Mobilfunknetze vergleichsweise kleinzellig, sodass aus den im Rahmen einer konkreten Wechselwirkung mit einer Mobilfunkeinheit ausgetauschten Daten und/oder durch Signalstärkevergleich von Signalen unterschiedlicher Sendestationen die aktuelle Position der Mobilfunkeinheit ermittelt werden kann.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung unterschiedlicher, von dem erfindungsgemäßen Verfahren behandelter Situationen,
- Figur 2:: ein Flussdiagramm einer Ausführungsform des erfindungsgemäßen Verfahrens.

### Ausführliche Beschreibung bevorzugter Ausführungsformen

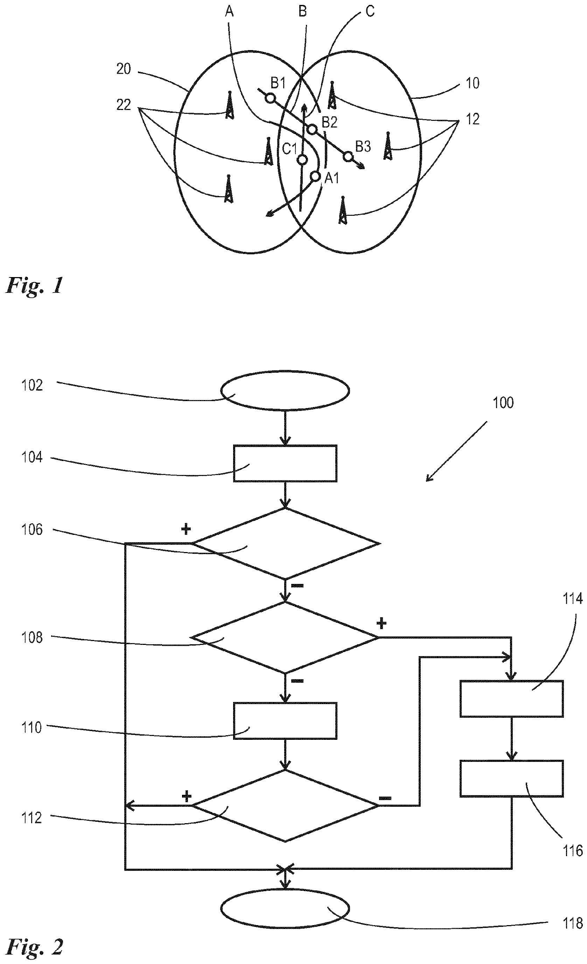

Figur 1 zeigt in stark schematisierter Darstellung typische Situationen, die von dem erfindungsgemäßen Verfahren, welches in einer Ausführungsform in Figur 2 als Flussdiagramm dargestellt ist, behandelt werden.

In Figur 1 sind zwei Mobilfunknetzwerke 10, 20 unterschiedlicher Mobilfunkbetreiber dargestellt, die sich jeweils aus einer Vielzahl unterschiedlicher Mobilfunk-Equipment-Elemente zusammensetzen, von denen repräsentativ in jedem Netzwerk 10, 20 verschiedene Funkmasten 12, 22 dargestellt sind. Die Abdeckungsbereiche der Mobilfunknetze 10, 20 überlappen einander bereichsweise. Im Folgenden sei angenommen, dass ein Benutzer einen expliziten Mobilfunkvertrag mit dem Mobilfunkbetreiber des Mobilfunknetzes 20 geschlossen habe. Das Mobilfunknetz 20 ist somit sein Heimatnetz. Das Mobilfunknetz 10 ist ein Fremdnetz, in dem er jedoch über sogenanntes Roaming Mobilfunkdienste abrufen kann, da zwischen den Betreibern der Mobilfunknetze 10, 20 entsprechende Roaming-Verträge bestehen. Gleichwohl ist es im Hinblick auf die Qualität der in Anspruch genommenen Mobilfunkdienste sowie die damit verbundenen Kosten in der Regel günstiger, die Dienste über das Heimatnetz und nicht über das Fremdnetz zu beziehen. Um jedoch auch im Fremdnetz günstige Dienste in Anspruch nehmen zu können, verfügt der Benutzer im vorliegenden Fall über eine doppelte SIM-Karte in seiner Mobilfunkeinheit. Dabei kann es sich um zwei unterschiedliche, physikalische SIM-Karten handeln, auf denen jeweils ein Identitätsprofil des Benutzers hinterlegt ist. Andererseits kann es sich auch um eine einzelne physikalische SIM-Karte handeln, auf der zwei Identitätsprofile des Benutzers hinterlegt sind. Zur Inanspruchnahme von Diensten in einem Mobilfunknetz 10, 20 hat sich der Benutzer dort mit dem jeweils entsprechenden Identitätsprofil einzuwählen.

Die Mobilfunkeinheit mit der doppelten SIM-Karte sei die Sende- und Empfangseinheit einer Infotainment-Anlage eines Kraftfahrzeugs mit welchem der Benutzer auf den Trajektorien A, B, C im Grenzgebiet zwischen den Mobilfunknetzen 10, 20 unterwegs sein kann. Auf den Trajektorien A, B, C sind jeweils Positionsmarkierungen A1, B1, B2, B3 und C1 eingezeichnet, die repräsentativ für unterschiedliche Fälle sind, die nachfolgend unter Rückgriff auf das Flussdiagramm von Figur 2 erläutert werden sollen.

Das Flussdiagramm von Figur 2 zeigt eine Ausführungsform des erfindungsgemäßen Verfahrens 100 und startet im Startblock 102, wobei angenommen sei, auf der Doppel-SIM-Karte sei das auf das Heimatnetzwerk 20 zugeschnittene Heimat-Profil aktiviert. Das für das Fremdnetz 10 zugeschnittene Identitätsprofil, das hier als Roaming-Profil bezeichnet werden soll, sei deaktiviert.

Dies kann beispielsweise über ein satellitengestütztes Positionsbestimmungssystem oder durch Auswertung von empfangenen Mobilfunkdaten erfolgen. Alternativ oder zusätzlich können Triangulationsverfahren zu Mobilfunk-Equipment-Elementen 12, 22 zur Bestimmung der aktuellen Position des Benutzers dienen. Hierdurch wird festgestellt, ob sich der Benutzer in einem Grenzgebiet zwischen unterschiedlichen Mobilfunknetzen befindet.

Zunächst sei angenommen, der Benutzer befinde sich auf der Trajektorie A am Positionspunkt A1. Im Prüfschritt 106 wird geprüft, ob das aktivierte Profil angemessen ist. Beispielsweise kann bestimmt werden, ob das aktuell aktive Profil zu demjenigen Mobilfunknetz passt, welches aktuell die stärkste Empfangsqualität bietet, was sich insbesondere dann anbietet, wenn der Benutzer gerade keine Dienste abruft, sich seine Mobilfunkeinheit somit im sog. Idle-Modus befindet. Werden aktuell Dienste abgerufen, wäre für einen Empfangsstärkenvergleich ein zusätzliches Modem erforderlich; ist dies nicht vorhanden, kann auf andere Angemessenheitskriterien, die der Fachmann im Einzelfall auswählen kann, zurückgegriffen werden. Am Punkt A1, der im Grenzgebiet zwischen den Mobilfunknetzen 10, 20 hart am Rand des Heimatnetzes 20 liegt, ist das aktuell aktive Profil nicht angemessen. Entsprechend geht das Verfahren weiter zum Prüfschritt 108, wo geprüft wird, ob die Fehlanpassung des aktiven Identitätsprofils eindeutig ist, d.h. ob eine Inanspruchnahme von Diensten ausschließlich über das Fremdnetz 10 oder - ggfs. in verminderter Qualität - auch noch über das Heimatnetz 20 möglich ist. Da sich der Positionspunkt A1 im Überlappungsgebiet beider Netzwerke 10, 20 befindet, ist letzteres der Fall. Die Fehlanpassung des aktiven Identitätsprofils ist somit nicht eindeutig. Das Verfahren geht über zu Schritt 110, wo erfindungsgemäß eine Abschätzung des Bewegungszielortes des Fahrzeuges stattfindet. Beispielsweise kann diese Zielabschätzung über eine explizite Zieleingabe im Navigationssystem des Kraftfahrzeugs, die ausgelesen wird, erfolgen. Alternativ kann eine statistisch basierte Zielabschätzung durchgeführt werden. Im Fall der Trajektorie A liegt das Ziel im Heimatnetz außerhalb des Grenzbereichs. Im Prüfschritt 112, der prüft, ob das Bewegungsziel in demjenigen Mobilfunknetz liegt, welches zu dem aktuell aktiven Identitätsprofil passt, fällt die Entscheidung positiv aus, sodass das Verfahren ohne einen Profilwechsel zum Verfahrensende 118 übergeht.

Als zweiter Fall sei derjenige Fall betrachtet, in dem der Positionsbestimmungsschritt 104 feststellt, dass sich das Kraftfahrzeug am Ort B1, d.h. ausschließlich im Empfangsbereich des Netzes 20, befindet. Im Prüfschritt 106 wird dann festgestellt, dass aktiviertes Identitätsprofil und empfangenes Mobilfunknetz übereinstimmen, sodass keine Änderung erforderlich ist und das Verfahren ohne weiteres zum Endschritt 118 übergehen kann.

Als dritter Fall sei derjenige Fall betrachtet, in dem der Positionsbestimmungsschritt in 104 feststellt, dass sich das Kraftfahrzeug an Position B2 befindet. Dieser Fall unterscheidet sich von dem oben erstgenannten Fall, in dem sich das Kraftfahrzeug am Ort A1 befunden hatte, nur durch das Ziel der Trajektorie. Bis zum Zielabschätzungsschritt 110 sei daher auf das oben Gesagte verwiesen. Im Prüfschritt 112 wird jetzt hingegen festgestellt, dass sich das Bewegungsziel im Fremdnetz 10 befindet, für welches das Roaming-Identitätsprofil angemessen wäre. Dies bedeutet, dass sich der mit dem Auswandern aus dem Heimatnetz verbundene Qualitätsverlust der empfangenen Dienste voraussichtlich weiter fortsetzen und über kurz oder lang ein Wechsel des Identitätsprofils und eine Einwahl in das Fremdnetz unvermeidlich sein wird. In dieser Situation erscheint es günstig, zur Dienste-Optimierung bereits jetzt einen Profilwechsel vorzunehmen. Dies erfolgt in Schritt 114, der in Schritt 116 von einer Einwahl in das Fremdnetz unter dem neuen Identitätsprofil gefolgt wird. Typischerweise umfasst der Identitätswechsel auch eine neue Initialisierung der SIM-Karte gemäß den einschlägigen Mobilfunkstandards. Nach Einwahl in das neue Netz 10 endet das Verfahren mit Schritt 118.

Als vierter Fall sei der Fall betrachtet, in dem sich das Kraftfahrzeug an der Position B3 befindet. Bis zu Schritt 108 kann auf den oben geschilderten ersten Fall verwiesen werden. Jetzt hingegen wird in Schritt 108 festgestellt, dass die Fehlanpassung des aktiven Profils an das stärkste empfangene Netz, nämlich des Heimatprofils an das Fremdnetz 10, eindeutig ist, weil an der Position B3 über das Heimatnetz keine Dienste mehr empfangbar sind. Daher ist ein Profilwechsel ohne weitere Prüfung zwingend erforderlich. Das Verfahren geht daher vom Prüfschritt 108 direkt zum Profilwechsel 114 und der Einwahl 116 in das neue Netz 10 über.

Schließlich verbleibt der Fall, dass sich das Kraftfahrzeug auf der Trajektorie C bewegt und sich an Punkt C1 befindet. Bis zum Prüfschritt 112 kann auf den oben geschilderten ersten Fall verwiesen werden. Jetzt jedoch kann die in Prüfschritt 112 gestellte Frage, in welchem der verfügbaren Netze das geschätzte Bewegungsziel liegt, nicht eindeutig beantwortet werden. Zur Lösung dieser Unsicherheit können unterschiedliche Strategien gefahren werden. Eine Strategie wäre, dass in diesem Fall kein Profilwechsel stattfindet. Eine solche Strategie stünde unter der generellen Zielsetzung einer Minimierung von Profilwechseln mit dadurch eventuell verursachten Verbindungsabbrüchen. Eine andere Strategie, die unter der generellen Zielsetzung einer stets optimalen Dienste-Inanspruchnahme steht, könnte in Abhängigkeit von der Stärke der gleichzeitig empfangenen Netze einen Profilwechsel forcieren, was einem Vorgehen gemäß dem Stand der Technik entsprechen würde. Gleiches wie im Fall einer im Grenzgebiet verbleibenden Trajektorie C gilt für den Fall, dass sich kein Bewegungsziel abschätzen lässt.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere ist das erfindungsgemäße Verfahren nicht auf Systeme mit Doppel-SIM-Karte beschränkt. Systeme mit SIM-Karten mit mehr als zwei gespeicherten Identitätsprofilen oder Systeme mit mehr als zwei SIM-Karten sind selbstverständlich ebenso denkbar und sollen von der Erfindung erfasst sein. Die Durchführung des erfindungsgemäßen Verfahrens kann periodisch wiederholt oder jeweils anlassbezogen durchgeführt werden.

### Bezugszeichenliste

- 10: Fremdnetz
- 12: Equipment in 10
- 20: Heimatnetz
- 22: Equipment in 20
- A, B, C: Trajektorien
- A1, B1, B2, B3, C1: Positionspunkte
- 100: Verfahren
- 102: Start
- 104: Ortsbestimmungsschritt
- 106: Prüfschritt zur Angemessenheit aktiven Profils
- 108: Prüfschritt zur Eindeutigkeit der Fehlanpassung des aktiven Profils
- 110: Bewegungszielabschätzungsschritt
- 112: Prüfschritt zur Zuordnung des geschätzten Bewegungsziels zu einem Netz
- 114: Profilwechselschritt
- 116: Einwahlschritt in neues Netz
- 118: Ende

## Patentansprüche

1. Verfahren zur Roaming-Verwaltung in einer Mobilfunkeinheit, in deren Speicher mehrere unterschiedliche, einzeln aktivierbare Identitätsprofile hinterlegt sind, die unterschiedliche Zugangsoptionen der Mobilfunkeinheit zu unterschiedlichen Mobilfunknetzen (10, 20) umfassen,
wobei automatisiert nach vorgegebenen Regeln und unter Berücksichtigung einer aktuellen Position (A1, B1, B2, B3, C1) der Mobilfunkeinheit eine Angemessenheit eines aktuell aktiven Identitätsprofils überprüft und eine Entscheidung über eine Umschaltung zu einem aktuell inaktiven Identitätsprofil getroffen wird,
**dadurch gekennzeichnet,**
**dass** die Mobilfunkeinheit eine Sende- und Empfangseinheit einer Infotainment-Anlage eines Kraftfahrzeugs ist und bei der Entscheidung über den Profilwechsel zusätzlich ein geschätztes Bewegungsziel der Mobilfunkeinheit berücksichtigt wird.

2. Verfahren nach Anspruch 1,
**dadurch gekennzeichnet,**
**dass** ein Navigationsziel, welches in einer funktional mit der Mobilfunkeinheit gekoppelten Navigationseinheit aktiv ist, als das geschätzte Bewegungsziel verwendet wird.

3. Verfahren nach Anspruch 1,
**dadurch gekennzeichnet,**
**dass** ein wahrscheinliches Bewegungsziel als das geschätzt Bewegungsziel verwendet wird,
wobei als das wahrscheinliche Bewegungsziel ein Bewegungsziel verwendet wird, welches nach vorgegebenen Regeln anhand von aktuellen Bewegungsumstände-Parametern aus einer Datenbank ausgewählt wird, die frühere Bewegungsziele der Mobilfunkeinheit samt deren zugeordneten Bewegungsumstände-Parametern umfasst.

4. Verfahren nach einem der vorangehenden Ansprüche,
**dadurch gekennzeichnet,**
**dass** der die Identitätsprofile enthaltende Speicher eine SIM-Karte umfasst, auf der eine Mehrzahl von jeweils ein Identitätsprofil repräsentierenden IMSIs gespeichert sind.

5. Verfahren nach einem der Ansprüche 1 bis 3,
**dadurch gekennzeichnet,**
**dass** der die Identitätsprofile enthaltende Speicher eine Mehrzahl von SIM-Karten umfasst, auf denen jeweils eine ein Identitätsprofil repräsentierende IMSI gespeichert ist.

6. Verfahren nach einem der vorangehenden Ansprüche,
**dadurch gekennzeichnet,**
**dass** die aktuelle Position (A1, B1, B2, B3, C1) der Mobilfunkeinheit unter Einbeziehung satellitengestützter Positionsbestimmung mittels einer funktional mit der Mobilfunkeinheit gekoppelten Positionsbestimmungseinheit ermittelt wird.

7. Verfahren nach einem der vorangehenden Ansprüche,
**dadurch gekennzeichnet,**
**dass** die aktuelle Position (A1, B1, B2, B3, C1) der Mobilfunkeinheit unter Einbeziehung positionsbezogener Daten aus mit der Mobilfunkeinheit in Datenaustausch stehenden Netzwerk-Equipment-Elementen (12, 22) ermittelt wird.

8. Infotainment-Anlage für ein Kraftfahrzeug, umfassend
- eine Mobilfunkeinheit als Sende- und Empfangseinheit, in deren Speicher mehrere unterschiedliche, einzeln aktivierbare Identitätsprofile hinterlegt sind, die unterschiedliche Zugangsoptionen der Mobilfunkeinheit zu unterschiedlichen Mobilfunknetzen umfassen,
- eine mit der Mobilfunkeinheit funktional gekoppelte Navigationseinheit,
- eine mit der Mobilfunkeinheit und der Navigationseinheit funktional gekoppelte Steuereinheit, die eingerichtet ist, automatisiert nach vorgegebenen Regeln und unter Berücksichtigung einer aktuellen Position (A1, B1, B2, B3, C1) der Mobilfunkeinheit eine Angemessenheit eines aktuell aktiven Identitätsprofils zu überprüfen und eine Entscheidung über eine Umschaltung zu einem aktuell inaktiven Identitätsprofil zu treffen, wobei die Steuereinheit weiter eingerichtet ist, bei der Entscheidung über den Profilwechsel zusätzlich ein aus der Navigationseinheit abrufbares, geschätztes Bewegungsziel der Mobilfunkeinheit zu berücksichtigen.

9. Kraftfahrzeug, ausgestattet mit einer Infotainment-Anlage nach Anspruch 8.

## Claims

1. A method for roaming management in a mobile radio unit, in the memory of which there are stored a plurality of different individually activatable identity profiles, which comprise different options for the mobile radio unit to access different mobile radio networks (10, 20), wherein a suitability of a currently active identity profile is automatically checked according to prescribed rules and taking into account a current position (A1, B1, B2, B3, C1) of the mobile radio unit, and a decision is made about whether to switch to a currently inactive identity profile,
**characterised in that**
the mobile radio unit is a transmitting and receiving unit of an infotainment system of a motor vehicle and the decision about whether to switch to a currently inactive identity profile additionally takes into account an estimated movement destination of the mobile radio unit.

2. A method according to claim 1,
**characterised in that**
a navigation destination active in a navigation unit that is functionally coupled to the mobile radio unit is used as the estimated movement destination.

3. A method according to claim 1,
**characterised in that**
a probable movement destination is used as the estimated movement destination,
wherein the probable movement destination that is used is a movement destination selected based on prescribed rules using current movement circumstance parameters from a database that comprises earlier movement destinations for the mobile radio unit together with associated movement circumstance parameters thereof.

4. A method according to any one of the preceding claims,
**characterised in that**
the memory containing the identity profiles comprises a SIM card, on which there are stored a plurality of IMSIs that each represent an individual identity profile.

5. A method according to any one of claims 1 to 3,
**characterised in that**
the memory containing the identity profiles comprises a plurality of SIM cards, each storing an IMSI representing an individual identity profile.

6. A method according to any one of the preceding claims,
**characterised in that**
the current position (A1, B1, B2, B3, C1) of the mobile radio unit is determined via satellite-assisted position finding by a position finding unit functionally coupled to the mobile radio unit.

7. A method according to any one of the preceding claims,
**characterised in that**
the current position (A1, B1, B2, B3, C1) of the mobile radio unit is determined via position-related data from network equipment elements (12, 22) that exchange data with the mobile radio unit.

8. An infotainment system for a motor vehicle, comprising:
- a mobile radio unit in the form of a transmitting and receiving unit, in the memory of which there are stored a plurality of different individually activatable identity profiles, which comprise different options for the mobile radio unit to access different mobile radio networks;
- a navigation unit functionally coupled to the mobile radio unit;
- a control unit functionally coupled to the mobile radio unit and to the navigation unit, the control unit being configured to automatically check a suitability of a currently active identity profile according to prescribed rules and taking into account a current position (A1, B1, B2, B3, C1) of the mobile radio unit, and to make a decision about whether to switch to a currently inactive identity profile;
wherein
the control unit is also configured, when deciding about whether to switch to the currently inactive identity profile, to additionally take into account an estimated movement destination of the mobile radio unit, which estimated movement destination can be called up from the navigation unit.

9. A motor vehicle equipped with an infotainment system according to claim 8.

## Revendications

1. Procédé de gestion d'itinérance dans une unité radio mobile dans la mémoire de laquelle sont enregistrés plusieurs profils d'identité différents pouvant être activés indépendamment, qui comprennent différentes options d'accès de l'unité radio mobile à différents réseaux radio mobile (10, 20),
selon lequel, de façon automatisée selon des règles prédéfinies et en prenant en considération la position actuelle (A1, B1, B2, B3, C1) de l'unité radio mobile, l'adéquation du profil d'identité actif actuel est contrôlée, et une décision est prise concernant une commutation sur un profil d'identité inactif actuel,
**caractérisé en ce que**
l'unité radio mobile est une unité d'émission et de réception d'une installation de divertissement d'un véhicule, et, lors de la décision concernant un changement de profil, la destination de déplacement estimée de l'unité radio mobile est en outre prise en considération.

2. Procédé conforme à la revendication 1,
**caractérisé en ce qu'**
on utilise en tant que destination de déplacement estimée la destination de navigation qui est active dans une unité de navigation fonctionnelle couplée à l'unité radio mobile.

3. Procédé conforme à la revendication 1,
**caractérisé en ce qu'**
une destination de déplacement probable est utilisée en tant que destination de déplacement estimée,
en tant que destination de déplacement probable on utilise une destination de déplacement qui, selon des règles prédéfinies est choisie à l'aide de paramètres de circonstance de déplacement actuels dans une bande de données qui comprend des destinations de déplacement antérieures de l'unité radio mobile y compris leurs paramètres de circonstance de déplacement associés.

4. Procédé conforme à l'une des revendications précédentes,
**caractérisé en ce que**
la mémoire renfermant les profils d'identité comprend une carte SIM sur laquelle est enregistré un ensemble d'IMSI représentant chacun un profil d'identité.

5. Procédé conforme à l'une des revendications 1 à 3,
**caractérisé en ce que**
la mémoire renfermant les profils d'identité comprend un ensemble de cartes SIM sur lesquelles est respectivement enregistré un IMSI représentant un profil d'identité.

6. Procédé conforme à l'une des revendications précédentes,
**caractérisé en ce que**
la position actuelle (A1, B1, B2, B3, C1) de l'unité radio mobile est détectée en prenant en compte la détermination de position assistée par satellite au moyen d'une unité de détermination de position fonctionnellement couplée à l'unité radio mobile.

7. Procédé conforme à l'une des revendications précédentes,
**caractérisé en ce que**
la position actuelle (A1, B1, B2, B3, C1) de l'unité radio mobile est détectée en prenant en compte des données concernant la position à partir d'éléments d'équipement de réseau (12, 22) en échange de données avec l'unité radio mobile.

8. Installation de divertissement destinée à un véhicule comprenant :
- une unité radio mobile réalisée sous la forme d'une unité d'émission et de réception dans la mémoire de laquelle sont enregistrés plusieurs profils d'identité différents pouvant être active indépendamment, qui comprennent différentes options d'accès de l'unité radio mobile à différents réseaux radio mobiles,
- une unité de navigation couplée fonctionnellement à l'unité radio mobile,
- une unité de commande couplée fonctionnellement à l'unité radio mobile et à l'unité de navigation et qui est susceptible de contrôler de manière automatisée, selon des règles prédéfinies et en prenant en considération la position actuelle (A1, B1, B2, B3, C1) de l'unité radio mobile, l'adéquation du profil d'identité actif actuel, et de prendre une décision concernant une commutation sur un profil d'identité inactif actuel,
l'unité de commande étant en outre réalisée pour, prendre en outre en considération lors de la décision concernant le changement de profil, la destination de déplacement estimée de l'unité radio mobile pouvant être consultée à partir de l'unité de navigation.

9. Véhicule équipé d'une installation de divertissement conforme à la revendication 8.
